Europäisches Patentamt

European Patent Office

Office européen des brevets

(19)

(11) Veröffentlichungsnummer: **0 003 526**
**B1**

(12) **EUROPÄISCHE PATENTSCHRIFT**

(45) Veröffentlichungstag der Patentschrift: **27.05.81**

(51) Int. Cl.³: **B 29 F 3/08, H 01 B 13/14**

(21) Anmeldenummer: **79100199.3**

(22) Anmeldetag: **24.01.79**

(54) Vorrichtung und Verfahren zum Umhüllen eines Leiters.

(30) Priorität: **10.02.78 DE 2805631**

(43) Veröffentlichungstag der Anmeldung:
**22.08.79 Patentblatt 79/17**

(45) Bekanntmachung des Hinweises auf die Patenterteilung:
**27.05.81 Patentblatt 81/21**

(84) Benannte Vertragsstaaten:
**CH FR GB IT SE**

(56) Entgegenhaltungen:
**DE - A - 2 542 532**
**DE - A - 2 732 629**
**FR - A - 2 133 666**
**GB - A - 1 183 693**
**US - A - 3 694 538**

(73) Patentinhaber: **Kabel- und Lackdrahtfabriken GmbH**
**Casterfeldstraße 62-64**
**D-6800 Mannheim 24 (DE)**

(72) Erfinder: **Kötz, Walter**
**Germaniastraße 1**
**D-6831 Brühl (DE)**
Erfinder: **Schmitz, Dieter**
**Wildbannstraße 8**
**D-6806 Viernheim (DE)**

(74) Vertreter: **Schnabel, Hartmut, Dr.-Ing.**
**Kabel- und Lackdrahtfabriken GmbH**
**Patentabteilung Postfach 1265**
**D-6800 Mannheim 1 (DE)**

## Vorrichtung und Verfahren zum Umhüllen eines Leiters

Die Erfindung betrifft eine Vorrichtung zum Umhüllen eines elektrischen Leiterstranges mit einer Isolierung, die mit einem Extruder, einer Vulkanisiereinrichtung und einer zwischen beiden angeordneten Kühleinrichtung ausgestattet ist, sowie ein Verfahren zum Betreiben dieser Vorrichtung.

Eine derartige Vorrichtung ist zwecks Herstellung eines Hochspannungskabels bereits bekannt (DE—AS 27 32 629). Dabei wird der mehrschichtig (innere halbleitende Schicht, isolierende Schicht, äußere halbleitende Schicht) ummantelte Leiter vor der anschließenden Vernetzung gekühlt, um eine spätere Verformung zu verhindern. Die Kühlung soll in verschiedenen Zonen erfolgen können, Ansonsten fehlen jedwede nähere Angaben, insbesondere ist eine konstruktiv geeignete Ausbildung der Kühlzonen und ein geeignetes Kühlmittel nicht angegeben.

Bei der aus der DE—AS 24 56 502 bekannten Vorrichtung zum Ummanteln eines elektrischen Leiterstranges mit vulkanisierbarem Werkstoff mittels eines Extruders und einer nachgeschalteten Vulkanisiereinrichtung ist zwischen dem Extruder und der Vulkanisiereinrichtung eine berührungslose Dichtungsanordnung vorgesehen, deren wesentliche Aufgabe es ist, den während des Betriebes in der Vulkanisiereinrichtung herrschenden Druck (etwa 20 bar) vom Extruder fernzuhalten. Bei dieser bekannten Ausführung, die zwar eine ohne Sichtbehinderung wirksame Prüfung des aus dem Extruder isoliert austretenden Leiterstranges ermöglicht, kann es jedoch vorkommen, daß die im plastischen Zustand in die Dichtungsanordnung eintretende Isolierung beschädigt wird und aufgrund ihrer nicht genügenden Verfestigung diese Dichtungsanordnung durch Verstopfen oder dgl. zeitweise betriebsunfähig macht.

Der Erfindung liegt nun die Aufgabe zugrunde, eine Vorrichtung der eingangs genannten Art sowie ein Verfahren zu ihrem Betrieb zu schaffen, die die Nachteile des Standes der Technik nicht aufweisen, die vielmehr eine Beschädigung der Isolierung und ein Verstopfen der Dichtungsanordnung mit Isoliermaterial weitgehend vermeiden und damit einen störungsfreien Betrieb der gesamten Vorrichtung ermöglichen.

Diese Aufgabe wird durch die Erfindung dadurch gelöst, daß die Kühleinrichtung flüssigkeitsdicht an die Vulkanisiereinrichtung über eine dieser zugeordnete Dichtungsanordnung angeschlossen ist und als mit Duschen beaufschlagbarer Kühlmittelbehälter ausgebildet ist, in den eine schräg nach unten geneigte Gleitrinne eintaucht. Diese über vorzugsweise die ganze Länge verteilt oberhalb der Gleitrinne angeordneten Duschen sind über zugehörige Zuflußleitungen an einem Regelventil angeschlossen, das mit einer Quelle für eine Kühlflüssigkeit z.B. Wasser verbunden ist. Durch Kühlung der den Leiterstrang umgebenden Isolierung wird erreicht, daß die Isolierung in mechanisch bereits verfestigtem Zustand in die der Vulkanisiereinrichtung vorgeschaltete Dichtungsanordnung eintritt. Neben der Beseitigung der Verstopfungsgefahr der Dichtungsanordnung wird außerdem noch eine Beschädigung insbesondere der Oberfläche der Isolierung vermieden. Weiterhin wird durch die im Kühlmittelbehälter befindliche Kühlflüssigkeit eine Dämpfung der von der Dichtungsanordnung ausgehenden Schwingungen erreicht, wodurch nachteilige Beeinflussungen der zumindest vor ihrem Eintritt in den Kühlmittelbehälter noch plastischen Isolierung ohne weitere zusätzlichen Vorkehrungen weitgehend ausgeschaltet werden.

Um durch Schwerkraftseinwirkungen hervorgerufene Exzentrizitäten am Material der Isolierung zu vermeiden, weist die Gleitrinne einen etwa U-förmigen Querschnitt mit annähernd halbkreisartig gewölbt ausgebildetem Bodenbereich auf.

Zur Anpassung an unterschiedliche Abmessungen und Querschnittsformen des isolierten Leiterstranges ist weiterhin vorgesehen, daß die Gleitrinne leicht lösbar befestigt ist.

Das zur Erfindung ebenfalls gehörende Verfahren, nach dem insbesondere Leiterstränge in sog. Sektorform in günstiger Weise behandelt werden können, besteht darin, daß der im Extruder mit einer Isolierung versehene Leiterstrang vor seinem Eintritt in die Vulkanisiereinrichtung einen mit einer Gleitrinne versehen Kühlmittelbehälter durchläuft, wobei während dieses Durchlaufes durch Einwirkung einer Kühlflüssigkeit die Isolierung verfestigt wird. Neben einer Verminderung der Unfallgefahr durch größere Distanzierung der Dichtungsanordnung vom Arbeitsbereich des Extruders zeichnet sich das erfindungsgemäße Verfahren noch dadurch aus, daß ein Prägen und Bedrucken von insbesondere Kunststoffkabeln möglich ist.

Weitere vorteilhafte Einzelheiten der Erfindung werden anhand der zugehörigen Zeichnung in der nachfolgenden Beschreibung erläutert.

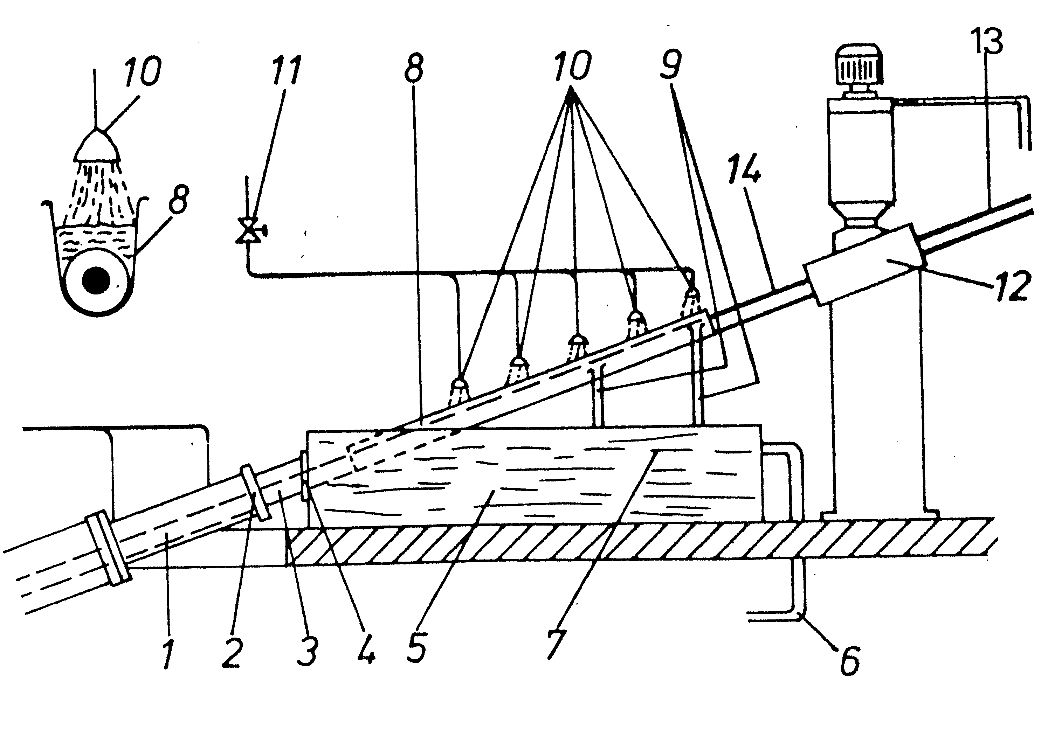

In der Figure ist mit 1 das Eintrittsende einer mit einer Dichtungsanordnung abgeschlossenen — nicht dargestellten — Vulkanisiereinrichtung bezeichnet, die aufgrund ihres herkömmlichen Aufbaues in bekannter Wiese arbeitet, also z.B. mittels Labyrinthdichtungen ein Austreten der Vulkanisieratmosphäre verhindert. Am Eintrittsende dieser Vulkanisiereinrichtung 1 ist ein aus z.B. wärmebeständigem und nicht rostendem Stahl (VA-Stahl) bestehender Flansch 2 flüssigkeitsdicht angeordnet, an dem ein Adapter 3 befestigt ist. Dieser ebenfalls flüssigkeitsdicht befestigte Adapter 3 kann aus wärmebeständigem und nicht rostendem Stahl (VA-Stahl) hergestellt sein. Damit ist sichergestellt, daß Kühlflüssigkeit weder nach außen austritt noch in die Vulkanisiereinrichtung eindringt. Das andere Ende des Adapters 3 mündet über einen zwischengeschalteten Einführungsstutzen 4 in einem Kühlmittelbehälter 5. Der aus z.B. wärmebeständigem und nicht rostendem Stahl (VA-Stahl) bestehende Kühlmittelbehälter 5 geht flüssigkeitsdicht über in den Adapter 3. Der nach oben offene Kühlmittelbehälter 5 besitzt eine Ablaufleitung 6, durch deren freies Ende die sich im Kühlmittelbehälter 5 sammelnde Kühlflüssigkeit 7, z.B. Wasser, nach Erreichen des entsprechenden Höhenniveaus ungehindert abfließen kann. In den Kühlmittelbehälter 5 taucht, wie in der Zeichnung dargestellt, zumindest teilweise eine Gleitrinne 8 ein.

Die in einer dem jeweiligen Anwendungsfall entsprechend angepaßten Lage führbare Gleitrinne 8 ist am Kühlmittelbehälter 5 befestigt mittels geeignet ausgebildeter.

Stützen 9 oder dgl. Die in das der Vulkanisiereinrichtung 1 zugewandten Ende des Kühlmittelbehälters 5 eintauchende Gleitrinne 8 ist schräg nach oben gerichtet über den Kühlmittelbehälter 5 angeordnet und sowohl nach oben als auch an ihren Schmalseiten offen. Die Gleitrinne 8 weist einen etwa U-förmig gestalteten Querschnitt mit annähernd halbkreisartig gewölbt ausgebildetem Bodenbereich auf. Oberhalb der leicht auswechselbaren Gleitrinne 8 befinden sich über ihre Länge verteilt angeordnete Duschen 10, die über zugehörige Zuflußleitungen an einem Regelventil 11 angeschlossen sind. Dieses die Durchflußmenge der Kühlflüssigkeit 7 beeinflussende Regelventil 11 kann am Frischwasserversorgungsnetz oder einer anderen geeigneten Quelle für die Kühlflüssigkeit 7 angeschlossen werden.

In Arbeitsrichtung vor dem Kühlmittelbehälter 5 befindet sich ein Extruder 12, der auf einem aus elektrisch leitfähigem Werkstoff, z.B. Kupfer oder Aluminium hergestellten Leiterstrang 13 eine aus vulkanisierbarem Material, beispielsweise Polyäthylen, vernetzbarem Polyäthylen oder einem anderen geeigneten Material bestehende Isolierung 14 in herkömmlicher Weise aufbringt. Dieser im Extruder 12 behandelte Leiterstrang 13 wird in die Gleitrinne 8 eingeführt, wobei die beim Einlauf in die Gleitrinne 8 noch plastische Isolierung 14 auf ihrem Wege durch die Gleitrinne 8 durch Einwirkung der aus den Duschen 10 austretenden Kühlflüssigkeit 7 abgekühlt und mechanisch verfestigt wird.

Die gleichzeitig als Gleitmittel zwischen Isolierung 14 und Gleitrinne 8 wirkende Kühlflüssigkeit 7 tritt am unteren Ende der Gleitrinne 8 aus und gelangt über den Kühlmittelbehälter 5 in die Ablaufleitung 6. Beim Verlassen der auswechselbaren, und damit dem jeweils zu behandelnden Leiterstrang 13 anpaßbaren Gleitrinne 8 ist die Isolierung 14 mechanisch verfestigt, so daß ihre Oberfläche beim Passieren der die Vulkanisiereinrichtung 1 abschließenden Dichtungsanordnung usw. keine nachteiligen Beeinflussungen erleidet.

## Patentansprüche

1. Vorrichtung zum Umhüllen eines elektrischen Leiterstranges (13) mit einer Isolierung (14), die mit einem Extruder (12), einer Vulkanisiereinrichtung (1) und einer zwischen beiden angeordneten Kühleinrichtung (5) ausgestattet ist, dadurch gekennzeichnet, daß die Kühleinrichtung (5) flüssigkeitsdicht an die Vulkanisiereinrichtung (1) über eine dieser zugeordnete Dichtungsanordnung angeschlossen ist und als mit Duschen (10) beaufschlagbarer Kühlmittelbehälter ausgebildet ist, in den eine schräg nach unten geneigte Gleitrinne (8) eintaucht.

2. Vorrichtung nach Patentanspruch 1, dadurch gekennzeichnet, daß die Gleitrinne (8) einen etwa U-förmigen Querschnitt mit annähernd halbkreisartig gewölbt ausgebildetem Bodenbereich aufweist.

3. Vorrichtung nach Patentanspruch 1 oder 2, dadurch gekennzeichnet, daß die Gleitrinne (8) leicht lösbar befestigt angebracht ist.

4. Vorrichtung nach Patentanspruch 1, 2 oder 3, dadurch gekennzeichnet, daß die Duschen (10) über die ganze oder nur einen Teil der Länge verteilt oberhalb der Gleitrinne (8) angeordnet sind.

5. Vorrichtung nach einem oder mehreren der vorhergehenden Patentansprüche 1 bis 4, dadurch gekennzeichnet, daß die Duschen (10) über zugehörige Zuflußleitungen an einem Regelventil (11) angeschlossen sind, das mit einer Quelle für eine Kühlflüssigkeit (7), z.B. Wasser verbunden ist.

6. Vorrichtung nach einem oder mehreren der vorhergehenden Patentansprüche 1 bis 5, dadurch gekennzeichnet, daß im Kühlmittelbehälter (5) eine Ablaufleitung (6) endet.

7. Vorrichtung nach einem oder mehreren der vorhergehenden Patentansprüche 1 bis 6, dadurch gekennzeichnet, daß am Kühlmittelbehälter (5) über einen Einführungsstutzen (4) ein Adapter (3) angebracht ist, der über einen Flansch (2) in die Vulkanisiereinrichtung (1) einmündet.

8. Vorrichtung nach einem oder mehreren der vorhergehenden Patentansprüche 1 bis 7, dadurch gekennzeichnet, daß der Kühlmittelbehälter (5) über den zwischengeschalteten Einführungsstutzen (4), Adapter (3) und Flansch (2) flüssigkeitsdicht an die Vulkanisiereinrichtung (1) angeschlossen ist.

9. Verfahren zum Betreiben der Vorrichtung nach einem oder mehreren der vorstehenden Patentansprüche 1 bis 8, dadurch gekennzeichnet, daß der im Extruder (12) mit einer Isolierung (14) versehene Leiterstrang (13) vor seinem Eintritt in die der Vulkanisiereinrichtung (1) vorgeschalteten Dichtungsanordnung den mit der Gleitrinne (8) versehenen Kühlmittelbehälter (5) durchläuft, wobei während dieses Durchlaufes durch Einwirkung der Kühlflüssigkeit (7) die Isolierung (14) verfestigt wird.

## Revendications

1. Dispositif pour enrober un fil conducteur électrique (13) avec un isolant (14), lequel dispositif se compose d'une extrudeuse (12), d'un système de vulcanisation (1) et d'un système de refroidissement (5) placé entre les deux, caractérisé en ce que le système de refroidissement (5) est raccordé de façon étanche au fluide au système de vulcanisation (1) per l'intermédiaire d'un dispositif d'étanchéité associé à ce système et constitué d'un réservoir de réfrigérant qui est soumis à des douches (10) et dans lequel plonge une goulotte de glissement (8) inclinée obliquement vers le bas.

2. Dispositif selon la revendication 1, caractérisé en ce que la goulotte (8) a une section droite en forme approximative de U avec un plancher voûté sous forme approximativement semicirculaire.

3. Dispositif selon l'une quelconque des revendications 1 ou 2, caractérisé en ce que la goulotte (8) est fixée de façon facilement amovible.

4. Dispositif selon l'une quelconque des revendications 1, 2 ou 3, caractérisé en ce que les douches (10) sont réparties sur toute la longueur ou seulement sur une partie de la longueur au-dessus de la goulotte (8).

5. Dispositif selon l'une quelconque des revendications 1 à 4, caractérisé en ce que les douches (10) sont raccordées par des tubulures d'alimentation particulières à une soupape de régulation (11) qui est reliée à une source de réfrigérant (7), par exemple de l'eau.

6. Dispositif selon l'une quelconque des revendications 1 à 5, caractérisé en ce qu'une tubulure d'écoulement (6) se termine dans le réservoir à réfrigérant (5).

7. Dispositif selon l'une quelconque des revendications précédentes, caractérisé en ce qu'on a rapporté sur le récipient (5), à l'aide d'un raccord d'admission (4), un adaptateur (3) qui débouche par une bride (2) dans le système de vulcanisation (1).

8. Dispositif selon l'une quelconque des revendications précédentes, caractérisé en ce que le réservoir (5) est raccordé de façon étanche au fluide au système de vulcanisation (1) par l'intermédiaire du raccord d'introduction (4), de l'adaptateur (3) et de la bride (2).

9. Procédé de fonctionnement du dispositif selon l'une quelconque des revendications précédentes, caractérisé en ce que le fil conducteur (13) muni dans l'extrudeuse (12) d'un isolant (14) traverse, avant son entrée dans le dispositif d'étanchéité placé en amont du système de vulcanisation (1) le réservoir à réfrigérant (5) muni de la goulotte (8), l'isolant (14) étant solidifié au cours de cette traversée par l'action du réfrigérant (7).

## Claims

1. Apparatus for sheathing an electrical conductor strand (13) with an insulation (14), the apparatus being equipped with an extruder (12), a vulcanising unit (1) and a cooling unit (5) located between the two, characterised in that the cooling unit (5) is connected in a fluid-tight manner to the vulcanising unit (1) by means of a sealing arrangement associated with the latter, and is constructed as a coolant vessel onto which spray-heads (10) can act and into which a downwardly inclined slide chute (8) dips.

2. Apparatus according to patent claim 1, characterised in that the slide chute (8) is of approximately U-shaped cross-section with a bottom zone of approximately semi-circularly arched shape.

3. Apparatus according to patent claim 1 or 2, characterised in that the slide chute (8) is fastened in place in an easily detachable manner.

4. Apparatus according to patent claim 1, 2 or 3, characterised in that the spray-heads (10) are distributed above the slide chute (8) for the entire length or only a part of the length thereof.

5. Apparatus according to one or more of the preceding patent claims 1 to 4, characterised in that the spray-heads (10) are connected, via corresponding feed-lines, to a regulating valve (11), which is connected to a source of coolant fluid (7), for example water.

6. Apparatus according to one or more of the preceding patent claims 1 to 5, characterised in that an overflow pipe (6) terminates in the coolant vessel (5).

7. Apparatus according to one or more of the preceding patent claims 1 to 6, characterised in that an adaptor (3) is attached by means of an inlet connection (4) to the coolant vessel (5), and this adaptor opens into the vulcanising unit (1) through a flange (2).

8. Apparatus according to one or more of the preceding patent claims 1 to 7, characterised in that the coolant vessel (5) is connected in a fluid-tight manner to the vulcanising unit (1) by means of the interposed inlet connection (4), adaptor (3) and flange (2).

9. Process for operating the apparatus according to one or more of the preceding patent claims 1 to 8, characterised in that the conductor strand (13) which has been provided with an insulation (14) in the extruder (12) passes, prior to its entry into the sealing arrangement provided before the vulcanising unit (1), through the coolant vessel (5) provided with the slide chute (8), whereby during this passage, the insulation (14) is solidified as a result of the action of the coolant fluid (7).

0 003 526